# EUROPEAN PATENT SPECIFICATION

(11) **EP 1 920 013 B1**
(45) Date of publication and mention of the grant of the patent: **28.09.2011**
(21) Application number: 06765215.6
(22) Date of filing: 04.08.2006
(51) Int. Cl.: C09D 11/00

(54) **A JET INK AND INK JET PRINTING PROCESS**
STRAHLTINTE UND TINTENSTRAHLDRUCKVERFAHREN
ENCRE POUR IMPRESSION JET D ENCRE ET PROCEDE D IMPRESSION JET D ENCRE

(30) Priority: 11.08.2005 GB 0516515
(43) Date of publication of application: 14.05.2008
(73) Proprietor: Sun Chemical B.V. (NL), 1382 LV Weesp (NL)
(72) Inventor: CAIGER, Nigel, Anthony, Wookey Hole, Somerset BA5 1BE (GB); SELMAN, Hartley, David, Bristol BS31 2BU (GB); BEATS, Graeme, Edward, Charles, Wells, Somerset BA5 2GE (GB)
(74) Representative: Fletcher, Matthew James Edwin
(86) International application number: PCT/GB2006/002911
(87) International publication number: WO 2007/017644

(56) References cited:
- WO-A-99/56177
- WO-A-2004/056581
- DE-A1- 10 063 066
- US-A- 5 889 084
- US-A1- 2004 101 291

## Description

The invention relates to an ink for use in ink jet printing (a jet ink) and to an ink jet printing process.

Free-radically curable jet inks have been developed that contain polymerisable monomers that readily crosslink via a chain reaction involving free radical intermediates following exposure to radiation, such as ultraviolet light or electron beam radiation. Free-radically curable jet inks are known for their ability to jet reliably and can be formulated with a wide degree of flexibility. They tend to offer satisfactory performance properties on a variety of media, such as packaging materials made from coated papers and plastics. However, free-radically curable jet inks traditionally have poor adhesion properties when applied to difficult substrates such as acrylics. Furthermore, free-radically curable jet inks often exhibit undesirably high levels of shrinkage when cured. Furthermore, the curing of free-radically curable inks is inhibited by the presence of molecular oxygen which reacts with free-radical intermediates and so it is often necessary for an inert environment substantially free from molecular oxygen to be present in printing processes using inks having free-radically cured components.

Cationically curable jet inks cure via a chain reaction involving cationic intermediates. Cationically curable jet inks that exhibit improved adhesion to demanding substrates compared to free-radiacally curable inks have been developed for traditional printing applications such as flexo or gravure printing processes. However, a lack of flexibility in the formulation of such inks arising from the somewhat limited range of suitable commercially available raw materials for cationically curable inks together with longer curing times and/or large doses or radiation required to reach full cure hardness has limited their use in ink jet printing applications.

Printing processes using radiation curable inks require a radiation source that emits energy at a suitable wavelength to cure the inks. UV lamps that emit radiation at wavelengths between 200nm and 450nm are widely used for that purpose. However, there are a number of disadvantages with the use of traditional UV lamps such as mercury discharge lamps. Traditional UV lamps are often very inefficient with only a small proportion of the radiation being emitted at the desired wavelengths. Traditional UV lamps are also temperature sensitive, that is, they emit light at the required wavelength only when warm. Accordingly, the response time of the lamp can be slow requiring them to be warmed up prior to use or the lamps need to be kept warm on a standby mode, which is wasteful of energy. The light intensity is often variable from traditional UV lamps leading to variations in the properties of the cured ink. Furthermore, and perhaps most importantly, traditional UV lamps are typically large and heavy so they are difficult to mount on ink jet printing heads, especially printing heads that are mounted on a moving carriage and single pass print heads. Printing processes that employ single pass printing heads require the use of ink formulations that cure rapidly from a single relatively low dose (for example less than 500mJ/cm²) of radiation from a radiation source that is typically mounted on or close to the print head. "Single pass" printing systems refer to those in which the image is printed on a single pass of the substrate under the print head. Typically, single pass print heads must be wide enough to extend across the width of a substrate.

There remains a need for ink jet printing processes that use radiation from sources other than traditional UV lamps and which provide cured ink films having a high level of cure and acceptable characteristics including good adhesion on a variety of substrates. There is, in particular, a need for single pass ink jet printing processes in which the inks display efficient curing from relatively low cure doses.

The invention provides a process of ink jet printing which comprises the steps of printing an ink onto a substrate and curing the ink using radiation from an LED, in which the ink comprises a cationically curable component, an iodonium salt photoinitiator and a sensitizer, wherein the cationically curable component comprises at least one cyclic carbonate or cyclic ester monomer.

It has been found that the use of an iodonium salt photoinitiator in combination with a sensitizer enables good levels of cure to be obtained when inks comprising cationically curable monomers, oligomers or prepolymers are cured using radiation from LEDs.

LED devices are typically relatively low cost devices as compared to traditional UV lamps. Moreover, LED UV light sources can operate at relatively low temperatures, can have rapid response times not requiring pre-heating, are relatively compact and light, and are relatively easy to integrate into digital equipment and print heads mounted on moving carriages. The LED radiation source may comprise an array of LED devices. The array of LED devices may, for example, be mounted across the width of a single pass print head.

Advantageously, an inerting environment is not provided in the region of the LED radiation source. Cationic curing ink jet inks according to the invention may be cured in the presence of oxygen obviating the need for an inert oxygen-free environment, such as a nitrogen blanket, to be provided to prevent oxygen inhibition during curing.

Advantageously, the ink is applied from a heated print head.

Advantageously, the process is a single pass ink jet printing process.

Previously, it was thought that cationically curable inks were not suited to curing using radiation from LEDs because LEDs typically emit light at wavelengths towards the longer end of the ultraviolet spectrum in the near UV range, for example wavelengths longer than 300nm and typically around 390nm. Photoinitiators typically employed with cationic ink formulations absorb UV radiation over only a limited range of wavelengths and are not ideally suited to the emissions spectra of available LED devices. Moreover, as discussed above, the curing of cationically curable inks has previously required relatively high doses of radiation and/or long cure times, even with traditional UV sources. Thus, cationically curable inks did not appear to be a suitable match for curing with radiation emitted by LED devices and it was not previously practical to use LEDs to cure cationically curable inks.

It has been found that the cationically curable inks of the invention can display a satisfactory level of cure when irradiated by LED UV lamps. Iodonium salt photoinitiators do not typically absorb sufficient radiation in the absence of sensitizers to initiate cationic chain reactions at wavelengths over 300nm (a typical maximum absorption of an iodonium salt being approximately 250nm) to be activated by LED UV radiation sources, but it has been found that iodonium salt photoinitiators can be effectively sensitised by sensitizers that absorb UV radiation at a wavelength in the range emitted by LED devices whereas other types of photoinitiator, such as triaryl sulphonium salts, are more difficult to effectively sensitise and typically do not absorb the relatively long wavelength radiation typically generated by LED radiation sources. A wide range of the available iodonium salt photoinitiators can be used in the process and inks of the invention with ditolyl iodonium hexafluorophosphate (sold under the trade name Omnicat 440) being preferred.

Advantageously, the sensitizer is able to absorb radiation at a wavelength in the range of from 300nm to 420nm. LED UV radiation sources typically emit radiation at wavelengths within that range with 390 being a common peak emission wavelength for commercially available LED devices. Preferably, the sensitizer absorbs radiation at a wavelength in the range of from 360, to 405nm and more preferably from 380 to 400nm. Advantageously, the sensitizer is selected from the group consisting of: substituted and unsubstituted polynuclear aromatic compounds such as naphthalenes, anthracenes and pyracenes, and substituted and unsubstituted thioxanthones and xanthones. Such sensitizers have been found to be particularly effective in sensitising iodonium salts and absorb radiation at a wavelength which is emitted by a LED UV source, for example, a wavelength in the range of from 300nm to 420nm. Other sensitizers that absorb radiation at such wavelengths may also be used as sensitizers for the inks of the invention such as conjugated aromatic compounds, for example, hydroxyl alkyl phenone photoinitiators. Advantageously, the sensitizer is an anthracene, preferably an alkoxy anthracene and more preferably the sensitizer is dibutoxy anthracene (DBA). DBA has been found to be a particularly effective sensitizer for use in the ink compositions of the invention.

Thioxanthone sensitizers have also been found to be effective sensitizers for use in the ink compositions of the invention. Moreover, thioxanthones display solubilities that are particularly suited to some ink compositions. Furthermore, thioxanthones typically have relatively good toxicity profiles.

Advantageously, the sensitizer is a thioxanthone of formula I: 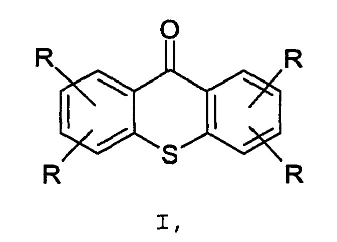 wherein each R is independently selected from hydrogen, C₁₋₁₂ alkyl, C₁₋₁₂ alkoxy or a halogen. Preferably, the sensitizer is 1-chloro-4-propoxythioxanthone (CPTX) or isopropyl thioxanthone (ITX).

ITX is a relatively inexpensive sensitizer. Other thioxanthones initiators that may be suitable for inclusion in ink compositions of the invention include isopropyl thioxanthone, 2,4-diethyl thioxanthone, 2-^{t}butyl thioxanthone, 2-chlorothioxanthone and 2-propoxy thioxanthone.

Advantageously, the ink comprises from 1 to 10% by weight photoinitiator based on the total ink composition. Such levels of photoinitiator have been found to provide ink compositions that display acceptable levels of cure with a level in the range of from 2 to 6% by weight being preferred. Advantageously, the ratio of photoinitiator to sensitizer is from 20:1 to 0.1:1 by weight, preferably, the ratio is from 10:1 to 1:1, and more preferably the ratio of photoinitiator to sensitizer is from 4:1 to 2:1 by weight. Such levels of sensitizer have been found to enable good levels of cure when the ink composition is irradiated using UV radiation from an LED radiation source.

Suitable monomers which may be present in the ink in combination with cyclic carbonate on cyclic ester monomers (the term "monomer" also encompassing polymerisable oligomers and prepolymers) include oxirane species with cycloaliphatic expoxides, especially 3,4-epoxy cyclohexyl methyl-3,4-epoxy cyclohexyl carboxylate, being preferred. Oxirane (also known as epoxide) monomers undergo cationic ring-opening polymerisation and are widely used in printing inks with cycloaliphatic oxiranes in particular.

Advantageously, the inks comprise from 20% to 80% by weight, preferably from 20% to 50% by weight, oxirane monomer. Some ink compositions according to the invention have been found to display especially good cure properties when they comprise at least 20% oxirane monomer by weight. Cycloaliphatic oxiranes (such as those sold under the designations Cyracure UVR6105, UVR6107, UVR6110 and UVR6128, by Dow), are particularly preferred because they tend to cure relatively quickly compared to linear oxiranes. Other preferred oxiranes include such epoxy-functional oligomers/monomers as the glycidyl ethers of polyols. Also, oxiranes derived by the epoxidation of unsaturated materials may also be suitable, for example, epoxidised soybean oil, epoxidised polybutadiene or epoxidised alkenes. Naturally occurring oxiranes may also be suitable, including the crop oil collected from Vernonia galamensis.

The high viscosity of many suitable oxiranes, including cycloaliphatic oxiranes, means that jet ink compositions including oxiranes as a polymerisable species must typically be "cut" with other compounds that act as diluents to reduce the viscosity of the composition.

Advantageously, the ink comprises a cyclic ester. It has been found that in the inclusion of cyclic ester compounds, such as lactones, in curable ink jet inks according to the invention provides an ink with a viscosity suitable for ink jet printing together with good cure properties. This finding is surprising as it was widely believed that cyclic esters would be unreactive species in cationically curable inks having a detrimental effect on the curing of an ink and, in particular, that they would inhibit cure speeds and create tacky films if used in high levels.

Cyclic esters are commercially available which are relatively inexpensive are substantially odourless and have excellent health and safety profiles.

Advantageously, the cyclic ester includes a 4-, 5-, 6- or 7- membered lactone ring. Esters including strained rings of 5 to 7 members (4 to 6 carbon atoms in the ring) have been found to be preferred. Preferred cyclic esters are selected from the group consisting of butyrolactones, valerolactones or caprolactones and more preferably the cyclic ester is γ-butyrolactone or ε-caprolactone. Such lactones have low viscosities and can be used to formulate inks having good curing profiles. Furthermore, they are relatively cheap and readily available.

Advantageously, the inks comprise at least 3%, preferably at least 5%, more preferably at least 10% and especially at least 12% by weight cyclic ester. It has been found that levels of cyclic ester in ink jet ink compositions of 3% and above are not as detrimental to the cure of the inks as previously supposed and that when present in an amount of at least 12%, for example, at least 15% by weight of the ink, that the viscosity of the ink composition is lowered considerably. Advantageously, the inks comprise no more than 50%, preferably less than 40% and more preferably less than 35% by weight cyclic ester. Levels of cyclic esters from 10 to 30% and especially from 15 to 25% by weight of the ink are preferred.

Advantageously, the ink comprises a cyclic carbonate. It has been found that the inclusion of cyclic carbonate components in cationically curable ink jet according to the invention provides inks with viscosities suitable for ink jet printing together with good cure properties. This finding is surprising as cyclic carbonates are deemed by most formulators and end users to be unreactive components and so would not have a positive effect on cure and, in particular, should not be included at high levels.

Advantageously, the cyclic carbonate includes a 4-, 5-, 6- or 7- membered ring with 5- membered cyclic carbonates being preferred. Suitable cyclic carbonates include propylene carbonate, glycerine carbonate, vinyl ethylene carbonate, ethylene carbonate and butylene carbonate. Propylene carbonate is especially preferred.

Advantageously, the inks comprise at least 3%, preferably at least 5% and more preferably at least 8% and especially at least 10% by weight cyclic carbonate. It has been found that levels of cyclic carbonate in ink jet ink compositions of 3% and above are not as detrimental to the cure of the inks as previously supposed and that when present in an amount of at least 8%, for example, at least 10% by weight of the ink, that the viscosity of the ink composition is lowered considerably. Advantageously, the inks comprise no more than 50%, preferably less than 40%, preferably less than 35% and especially less than 25% and especially by weight cyclic carbonate. Levels of cyclic carbonates of from 5 to 25% and especially from 8 to 15% by weight of the ink are preferred.

It has been found that the inclusion of propylene carbonate in particular facilitates the curing of the inks with low doses of UV radiation. Preferably, the ink comprises propylene carbonate at a level of from 3 to 30% of the total ink composition by weight and more preferably from 5 to 20% by weight.

Preferably, the ink comprises an oxirane in combination with a cyclic ester and/or a cyclic carbonate.

In addition to the at least one oxirane, cyclic carbonate or cyclic ester the inks of the invention may further comprise an oxetane monomer. As an alternative, or in addition to the oxetane monomer, the ink composition may comprise a vinyl ether. Oxetane and vinyl ether monomers are known to help achieve low viscosities (for example of less than 50 cPs at 25°C) in cationically cured ink compositions.

Monofunctional oxetanes have the disadvantage that they are only suitable for use at low levels as the level of cure usually deteriorates when they are used at higher levels. Di-functional oxetanes have also been used but at the levels required to reduce the viscosity sufficiently for the ink to be used for ink jet printing, film shrinkage, poor adhesion and brittle films can occur. The approach of using of oxetane and some vinyl ether compounds in ink compositions has also been shown to lead to poor adhesion on swellable plastic substrates because those materials do not attack or etch into the plastic.

It is preferred that the compositions of the invention that comprise an oxirane monomer are cut with at least one cyclic carbonate and/or cyclic ester thereby reducing the level of oxetane and/or vinyl ether required to achieve suitable viscosities for ink jet printing. The substitution of oxetane or vinyl ether viscosity lowering agents by cyclic carbonate or cyclic esters has been found to improve the level and speed of cure at relatively low UV doses.

Advantageously, the cure dose is less than 500mJ/cm² and preferably less than 200mJ/cm². The ink compositions of the invention have often been found to cure at low UV doses compared with traditional cationically curable inks and also relative to free-radical curable inks, thereby allowing a reduction in the number and/or intensity of the LED's used with a consequent saving in cost.

The invention further provides a cationic ink jet ink comprising:
a photoinitiation system able to absorb radiation at a wavelength in the range of from 300 nm to 420 nm, the photoinitiation system including an iodonium salt photoinitiator and a sensitizer; and
a cationically curable component including at least one radiation-polymerisable monomer that is a cyclic ester or cyclic carbonate.

The ink viscosity is suitable for use in ink jet printing, for example, the viscosity is less than 50 mPas at 25°C and preferably less than 35 mPas at 25°C.

Additives which may be used in conjunction with the principal components of the ink formulations of the present invention include stabilizers, plasticizers, pigments, waxes, slip aids, levelling aids, adhesion promoters, surfactants and fillers. The compositions of the present invention typically comprise, as additional components to those referred to above, one or more of pigments, dyes, waxes, stabilizers, and flow aids, for example as described in "The Printing Ink Manual", 5th Edition, edited by R.H. Leach et al., published in 1993 by Blueprint.

The invention will now be illustrated by way of example with reference to the specific embodiments given in Table 1.

Table 1 shows four ink compositions according to the invention (entries 2 to 5) together with a comparative example (entry 1) in which no sensitizer is present.

**Table 1: Ink Compositions**

| **ENTRY** | **1** | **2** | **3** | **4** | **5** |
|---|---|---|---|---|---|
| **Description** | **P.I.** | **P.I. + ITX** | **P.I. + CPTX** | **P.I. + DBA** | **2 X (P.I. + CPTX)** |
| Epoxy UVR-6105 | 37.25 | 36.25 | 36.25 | 36.25 | 34.25 |
| Di-Oxetane | 33.5 | 33.5 | 33.5 | 33.5 | 33.5 |
| Propylene Carbonate | 11.25 | 11.25 | 11.25 | 11.25 | 9.25 |
| Omnicat 440 | 3 | 3 | 3 | 3 | 6 |
| ITX | | 1 | | | |
| CPTX | | | 1 | | 2 |
| Dibutoxy anthracene (DBA) | | | | 1 | |
| Magenta Pigment Violet 19 Dispersion | 15 | 15 | 15 | 15 | 15 |
| Total | 100 | 100 | 100 | 100 | 100 |
| Viscosity @ 45°C | 24.6 cP | 24.6 cP | 24.6 cP | 24.0 cP | 32.2 cP |
| Equivalent Dose mJ/cm² | Did not cure | 195 | 180 | 395 | 50 |
| Scratch Test - Nail | | Hard, Non Markable | Hard, Non Markable | Hard, Non Markable | Hard, Non Markable |
| MEK Rubs - 5 mins | | >100 | >100 | >100 | >100 |
| MEK Rubs - 60 mins | | >100 (less removal) | >100 (less removal) | >100 (less removal) | >100 (less removal) |

The inks in Table 1 were drawn down onto a rigid vinyl PVC substrate at 12 microns thickness and then cured with a Phoson RX-10 LED radiation source emitting light at 395nm. The radiation dose was measured using an IL390c light bug. All components are given as a % weight of the total composition. P.I. = photoinitiator.

Entry 1 shows that in the absence of a suitable sensitizer no curing of the ink is achieved using the LED radiation source. Ink compositions including ITX, CPTX and DBA sensitizers together with an Omnicat 440 photoinitiator (a trade name for ditolyl iodonium hexaflurophosphate) all displayed good curing as shown by the favourable nail scratch test and MEK rubs test results at relatively low UV radiation doses of less than 400mJ/cm² as shown in entries 2 to 4. Doubling the amount of photoinitiator and sensitizer (whilst maintaining the photoinitiator: sensitizer ratio at 3:1) significantly decreased the radiation dose required to cure the ink as can be seen by comparing entry 5 with entry 3. However, this led to an increase in viscosity of the ink. Thus, those embodiments illustrate that the inks of the invention achieve a balance between good cure properties at low radiation doses and viscosities suitable for ink jet printing with the ink compositions having components in the preferred ranges described above providing good curing properties.

## Claims

1. A process of ink jet printing which comprises the steps of printing an ink onto a substrate and curing the ink using radiation from an LED, in which the ink comprises a cationically curable component, an iodonium salt photoinitiator and a sensitizer, wherein the cationically curable component comprises at least one cyclic carbonate or cyclic ester monomer.

2. A process according to claim 1, wherein the sensitizer is able to absorb radiation at a wavelength in the range of from 300 nm to 420 nm.

3. A process according to claim 1 or claim 2 wherein the sensitizer is selected from the group consisting of:
substituted and unsubstituted polynuclear aromatic compounds such as napthalenes, anthracenes and pyracenes,
and substituted and unsubstituted thioxanthones and xanthones.

4. A process according to claim 3, wherein the sensitizer is dibutoxy anthracene.

5. A process according to claim 3 wherein the sensitizer is a thioxanthone of formula I: 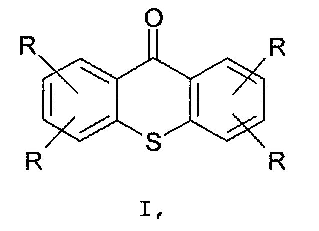 wherein each R is independently selected from hydrogen, C₁₋₁₂ alkyl, C₁₋₁₂ alkoxy or a halogen.

6. A process according to claim 5, wherein the sensitizer is 1-chloro-4-propoxythioxanthone or isopropyl thioxanthone.

7. A process according to any preceding claim, wherein the ink comprises photoinitiator at a level of from 1 to 10% of the total ink composition by weight.

8. A process according to any preceding claim, wherein the ratio of photoinitiator to sensitizer is from 20:1 to 0.1:1 by weight.

9. A process according to claim 8, wherein the ratio of photoinitiator to sensitizer is from 4:1 to 2:1 by weight.

10. A process according to any preceding claim wherein an inerting environment is not provided in the region of the LED radiation source.

11. A cationic ink jet ink comprising:
a photoinitiation system able to absorb radiation at a wavelength in the range of from 300 nm to 420 nm, the photoinitiaton system including an iodonium salt photoinitiator and a sensitizer; and
a cationically curable component comprising at least one cyclic ester or cyclic carbonate monomer.

12. An ink according to claim 11, wherein the viscosity is less than 50 mPas at 25°C.

13. A process according to any one of claims 1 to 10 or an ink according to claim 11 or claim 12 wherein the cationically curable component further comprises an oxirane monomer.

## Patentansprüche

1. Verfahren des Tintenstrahldruckens, das die Schritte umfasst, eine Tinte auf ein Substrat zu drucken und die Tinte unter Verwendung von Strahlung aus einer LED zu vernetzen, bei dem die Tinte eine kationisch vernetzbare Komponente, einen Iodoniumsalz-Photoinitiator und einen Sensibilisator umfasst, wobei die kationisch vernetzbare Komponente mindestes ein zyklisches Karbonat- oder zyklisches Estermonomer umfasst.

2. Verfahren nach Anspruch 1, wobei der Sensibilisator Strahlung mit einer Wellenlänge im Bereich von 300 nm bis 420 nm absorbieren kann.

3. Verfahren nach Anspruch 1 oder Anspruch 2, wobei der Sensibilisator aus der Gruppe ausgewählt ist, die aus substituierten und unsubstituierten mehrkernigen aromatischen Verbindungen wie etwa Naphthalinen, Anthracenen und Pyracenen und substituierten und unsubstitierten Thioxanthonen und Xanthonen besteht.

4. Verfahren nach Anspruch 3, wobei es sich bei dem Sensibilisator um Dibutoxyanthracen handelt.

5. Verfahren nach Anspruch 3, wobei es sich bei dem Sensibilisator um ein Thioxanthon der Formel I handelt: 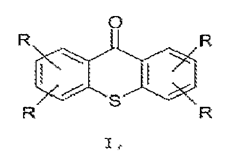 worin R jeweils unabhängig aus Wasserstoff, C₁₋₁₂-Alkyl, C₁₋₁₂-Alkoxy oder einem Halogen ausgewählt ist.

6. Verfahren nach Anspruch 5, wobei es sich bei dem Sensibilisator um 1-Chlor-4-Propoxythioxanthon oder Isopropylthioxanthon handelt.

7. Verfahren nach einem der vorhergehenden Ansprüche, wobei die Tinte den Photoinitiator in einem Anteil von 1 bis 10 Gew.-% der gesamten Tintenzusammensetzung umfasst.

8. Verfahren nach einem der vorhergehenden Ansprüche, wobei das Verhältnis Photoinitiator zu Sensibilisator gewichtsbezogen 20:1 bis 0,1:1 beträgt.

9. Verfahren nach Anspruch 8, wobei das Verhältnis Photoinitiator zu Sensibilisator gewichtsbezogen 4:1 bis 2:1 beträgt.

10. Verfahren nach einem der vorhergehenden Ansprüche, wobei im Bereich der LED-Strahlungsquelle kein Inertisierungsumfeld vorgesehen ist.

11. Kationische Tintenstrahltinte, Folgendes umfassend:
ein Photoinitiierungssystem, das Strahlung mit einer Wellenlänge im Bereich von 300 nm bis 420 nm absorbieren kann, wobei das Photoinitiierungssystem einen Iodoniumsalz-Photoinitiator und einen Sensibilisator umfasst; und
eine kationisch vernetzbare Komponente, die mindestes ein zyklisches Ester- oder zyklisches Karbonatmonomer umfasst.

12. Tinte nach Anspruch 11, wobei die Viskosität bei 25°C weniger als 50 mPas beträgt.

13. Verfahren nach einem der Ansprüche 1 bis 10 oder Tinte nach Anspruch 11 oder Anspruch 12, wobei die kationisch vernetzbare Komponente ein Oxiranmonomer umfasst.

## Revendications

1. Procédé d'impression à jet d'encre qui comprend les étapes d'impression d'une encre sur un substrat et de durcissement de l'encre en utilisant un rayonnement depuis une LED, dans lequel l'encre comprend un composant durcissable de façon cationique, un photo-initiateur de sel d'iodonium et un sensibilisateur, où le composant durcissable de façon cationique comprend au moins un monomère de carbonate cyclique ou d'ester cyclique.

2. Procédé selon la revendication 1, dans lequel le sensibilisateur est capable d'absorber un rayonnement à une longueur d'onde dans la plage de 300 nm à 420 nm.

3. Procédé selon la revendication 1 ou la revendication 2 dans lequel le sensibilisateur est choisi dans le groupe constitué de : composés aromatiques polynucléaires substitués et non substitués tels que des naphtalènes, des anthracènes et des pyracènes, et des thioxanthones et xanthones substituées et non substituées.

4. Procédé selon la revendication 3, dans lequel le sensibilisateur est le dibutoxyanthracène.

5. Procédé selon la revendication 3 dans lequel le sensibilisateur est une thioxanthone de formule 1 : 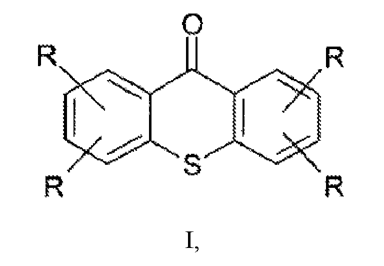 dans laquelle chaque R est indépendamment choisi parmi un hydrogène, un alkyle en C₁₋₁₂, un alcoxy en C₁₋₁₂ ou un halogène.

6. Procédé selon la revendication 5, dans lequel le sensibilisateur est la 1-chloro-4-propoxythioxanthone ou l'isopropylthioxanthone.

7. Procédé selon l'une quelconque des revendications précédentes, dans lequel l'encre comprend un photo-initiateur à un taux de 1 à 10 % de la composition en poids de l'encre totale.

8. Procédé selon l'une quelconque des revendications précédentes, dans lequel le rapport du photo-initiateur au sensibilisateur est de 20:1 à 0,1:1 en poids.

9. Procédé selon la revendication 8, dans lequel le rapport du photo-initiateur au sensibilisateur est de 4:1 à 2:1 en poids.

10. Procédé selon l'une quelconque des revendications précédentes dans lequel un environnement d'inertage n'est pas produit dans la région de la source de rayonnement de la LED.

11. Encre pour jet d'encre cationique comprenant:
un système de photo-initiation capable d'absorber un rayonnement à une longueur d'onde dans la plage de 300 nm à 420 nm, le système de photo-initiation comprenant un photo-initiateur de sel d'iodonium et un sensibilisateur ; et
un composant durcissable de façon cationique comprenant au moins un monomère d'ester cyclique ou de carbonate cyclique.

12. Encre selon la revendication 11, dans laquelle la viscosité est inférieure à 50 mPa.s à 25 °C.

13. Procédé selon l'une quelconque des revendications 1 à 10 ou encre selon la revendication 11 ou la revendication 12 dans lequel le composant durcissable de façon cationique comprend en outre un monomère d'oxirane.
